# EUROPEAN PATENT SPECIFICATION

(11) **EP 1 709 136 B1**
(45) Date of publication and mention of the grant of the patent: **26.03.2008**
(21) Application number: 05702227.9
(22) Date of filing: 13.01.2005
(51) Int. Cl.: C09K 3/14

(54) **COATED ABRASIVES**
BESCHICHTETE SCHLEIFMITTEL
ABRASIFS REVETUS

(30) Priority: 15.01.2004 IE 20040026
(43) Date of publication of application: 11.10.2006
(73) Proprietor: Element Six Limited, County Clare (IE)
(72) Inventor: EGAN, David Patrick, County Clare (IE); ENGELS, Johannes Alexander, Newport, County Tipperary (IE); FISH, Michael Lester, Ennis, County Clare (IE)
(74) Representative: Price, Nigel John King
(86) International application number: PCT/IB2005/000057
(87) International publication number: WO 2005/078042

(56) References cited:
- EP-A- 0 577 375
- US-A- 5 224 969

## Description

### BACKGROUND OF THE INVENTION

This invention relates to coated abrasives, a process for their production, and to coated abrasives for use in abrasive-containing tools.

Abrasive particles such as diamond and cubic boron nitride are commonly used in cutting, grinding, drilling, sawing and polishing applications. In such applications, abrasive particles are mixed with metal powder mixes, then sintered at high temperatures to form bonded cutting elements. Typical bond matrices contain iron, cobalt, copper, nickel and/or alloys thereof.

Common problems in applications are retention of particles in the bond matrix, and resistance against oxidative attack during the sintering process and the subsequent application.

These problems are commonly addressed by coating the abrasive particles with metals or alloys which bond chemically to the particle, and alloy to the bond matrix. Typically, chemical vapour deposition (CVD) or physical vapour deposition (PVD sputter coating) techniques are used. Titanium carbide is an example of a material that has been proposed as a coating for abrasive particles, because of its good adhesion to diamond. Chromium carbide is a similar coating material that can be used.

A problem with the use of titanium carbide coatings where the bond matrix contains bronze or Cu is that these materials tend to react with the titanium carbide, such that it may be reacted away. The diamond particles are then susceptible to graphitisation of the diamond particle surfaces, where the bond matrix consists of metals that are typically used as solvent/catalysts for diamond synthesis. Examples of such metals are Fe, Co and Ni. In the molten state, these metals are capable of dissolving diamond, which precipitates on cooling to form graphite. This process of graphitisation of the diamond surface not only weakens the particles but may also result in poorer retention of the particles in the bond.

During manufacture of cutting tools, for example during sintering of saw segments containing diamond particles, oxygen may be present as surface oxides, dissolved oxygen in the metal powders that form the bond matrix, or in gaseous form in the atmosphere or as a consequence of application of the titanium carbide coating itself. At the sintering temperatures this oxygen is liable to attack the surface of the diamond particles, which weakens the particles.

### SUMMARY OF THE INVENTION

A coated super-hard abrasive comprising a core of super-hard abrasive material, an inner layer of a metal carbide, nitride, boride or carbonitride chemically bonded to an outer surface of the super-hard abrasive material and an outer layer of a metal carbonitride, in particular titanium carbonitride.

The outer layer is preferably applied by physical vapour deposition.

The ultra-hard abrasive material is typically diamond or cBN based, and may include diamond or cBN grit, PCD substrates, thermally stable PCD (TSPCD) substrates, PcBN substrates, CVD diamond film, single crystal diamond substrates.

The inner layer is formed from an element capable of forming (singly or in combination) carbides, nitrides or borides to the surface(s) of the abrasive material when applied as an inner layer using a hot coating process. Typically these elements come from groups IVa, Va, VIa, IIIb and IVb of the periodic table. The inner layer is preferably a titanium or chromium carbide coating in the case of a diamond abrasive core, or a titanium or chromium nitride, boride or boronitride coating in the case of a cBN abrasive core, although other metals such as vanadium, molybdenum, tantalum, indium, zirconium, niobium, tungsten, aluminium, boron or silicon, for example, could also be used.

### DESCRIPTION OF PREFERRED EMBODIMENTS

Whilst the invention extends to various forms of coated abrasive material, it will in the most part be described with reference to the coating of diamond grit for convenience.

Ti in the form of titanium carbide or titanium nitrides and borides have been shown to be useful coating materials for diamond and cBN substrates, respectively. They are particularly useful because of their ability to bind chemically to the substrate and to protect the substrate. However, as has been mentioned previously, they are not suitable in some applications, particularly where they are sintered in aggressive sintering conditions in the presence of bronze or copper, and where the bond matrix contains ferrous metals, for example, or in the presence of oxygen.

It has been found that the advantages of titanium coatings can be extended to other applications utilising diamond grits where an outer coating of a metal carbonitride, in particular titanium carbonitride, is applied over the titanium coating layer. This is particularly the case where diamond grit is used in a metal bond matrix containing ferrous metals to form an abrasive tool component upon sintering. It forms a barrier to the diffusion of Co, Fe and Ni from a metal bond matrix thereof, allowing it to be used in low Cu in Fe, Co and Cu hot pressing processes and in pure iron bonds even where sintering conditions require long sintering times and high temperatures. It is also useful where the titanium carbide coating, in the case of diamond particles, would be reacted away by a constituent of the metallic material, for example bronze and copper brazing of the material to another metallic or ceramic material, or sintering or infiltrating a powder to form an infiltrated powder material.

It is especially useful in the making of diamond impregnated tools such as segments for saw blades, drills, beads for diamond wires especially where high amounts of bronze or copper limit the usefulness of titanium carbide coatings, the making of brazed diamond layer tools such as brazed diamond wire beads, the making of diamond containing metal matrix composites, brazing of diamond materials such as affixing TSPCD, PCD and diamond drillstones to a drill body, affixing CVD, monocrystal, TSPCD and PCD to a saw blade, tool post, drill body and the like.

Additionally, the coated diamond impregnated tools yield improved performance such as longer tool life and higher productivity. Coated diamond particles of the invention for brazing applications allow the use of simple brazes that work in air as opposed to active brazes containing Ti which require the exclusion of oxygen.

The coated abrasive particles are preferably formed using a hot coating process for applying the inner layer and a PVD process for applying the outer layer.

The diamond grit particles are those used conventionally in the manufacturing of metal bonded tools. They are generally uniformly sized, typically 0.1 to 10 mm. Examples of such diamond grit particles include Micron grit 0.1 to 60 micron, wheel grit 40 micron to 200 micron, saw grit 180 micron to 2 millimeter, mono crystal 1 millimeter to 10 millimeter, CVD inserts of a few square millimeter to discs up to 200 millimeter diameter, PCD inserts of a few square millimeter to discs 104 millimeter diameter, cBN grit in micron range 0.1 to 60 micron, in wheel grit range 40 micron to 200 micron, PCBN inserts of a few mm to discs up to 104 mm diameter.

The diamond particles are first coated in a hot coating process to provide an inner layer, which may be a metal carbide, nitride or carbonitride layer. In the case of cBN, such inner coating would typically be a metal nitride or boride or boronitride layer. In this hot coating process, the metal-based coat is applied to the diamond substrate under suitable hot conditions for such bonding to take place. Typical hot coating technologies that can be used include processes involving deposition from a metal halide gas phase, CVD processes, or thermodiffusion vacuum coating or metal vapour deposition processes, for example. Deposition from a metal halide gas phase and CVD processes are preferred.

In processes involving deposition from a metal halide gas phase, the particles to be coated are exposed to a metal-halide containing the metal to be coated (e.g. Ti) in an appropriate gaseous environment (e.g. non-oxidising environments containing one or more of the following: inert gas, hydrogen, hydrocarbon, reduced pressure). The metal halide may be generated from a metal as part of the process.

The mixture is subjected to a heat cycle during which the metal-halide transports the Ti to the surfaces of the particles where it is released and is chemically bonded to the particles.

The outer metal carbonitride layer is deposited using a CVD process or a cold coating technique such as PVD, which is preferred. This is a low temperature process in that insufficient heat is generated to cause significant carbide chemical bonding to the substrate. Hence, if used alone, it would result in poor adhesion to the diamond particles. An example of a PVD process for applying the outer coating is reactive sputter coating in which a reactive gas such as a hydrocarbon gas and/or nitrogen is admitted during the coating. The gas reacts with the metal vapour formed by the sputtering process resulting in the deposition of carbonitrides. In this method, the ratio of Ti:(C,N) and C:N can be optimized to further enhance the properties of the outer layer.

The outer layer is preferably titanium carbonitride.

This invention will now be described, by way of example only, with reference to the following non-limiting example.

### EXAMPLE

Diamond grit from Element Six, 40/45 US mesh size, was coated in a CVD process to produce TiC coated diamond according to general methods commonly known in the art. The CVD TiC coated diamond was then used as the substrate for the second coating step.

1,000 carats of this TiC coated diamond, 40/50 US mesh size, was placed in a magnetron sputter coater with a rotating barrel, with a large pure titanium metal plate as the target. The coating chamber was evacuated, argon was admitted and the power turned on to form plasma. Sputtering power was increased to 10A (400V) on target while rotating the barrel to ensure an even coating on all the diamond particles at 20sccm argon pressure. C₄H₁₀ gas was admitted at 5sccm along with nitrogen gas to achieve an Optical Emission Measurement of 70%. Sputtering of titanium reacted with carbon and nitrogen was continued for 2 hours. Afterwards, the coated diamond was allowed to cool before removing from the chamber.

An analysis of this coated diamond was undertaken, consisting of X-ray diffraction, X-ray fluorescence, Chemical assay of the coating, Optical and Scanning Electron Microscopy image analysis and particle fracture followed by cross-sectional analysis on the SEM.

Visually, this coating appeared a dark red / coppery colour. This colouring appeared evenly distributed over each particle and each particle appeared identical. The coating looked uniform and without any uncoated areas. Observation on the SEM again showed an even coating with a slightly rough morphology. Fractured particles were also observed on the SEM. A two-layer structure was clearly evident, the TiCN layer having a thickness of about 0.2 microns. This particular coating resulted in an assay of 1.03%. The TiC coating in this size used for this batch typically has an assay of 0.45%. The rest of the 1.03% is therefore attributable to the TiCN layer on top of the TiC. When analysed using XRD, TiC and TiCN were found. XRF analysis showed 100% Ti.

## Claims

1. A coated super-hard abrasive comprising a core of super-hard abrasive material, an inner layer of a metal carbide, nitride, boride or carbonitride chemically bonded to an outer surface of the super-hard abrasive material and an outer layer of a metal carbonitride deposited on the inner layer.

2. A coated super-hard abrasive according to claim 1, wherein the outer layer is formed of titanium carbonitride.

3. A coated super-hard abrasive according to claim 1 or claim 2, wherein the outer layer is deposited by physical vapour deposition.

4. A coated super-hard abrasive according to any one of the preceding claims, wherein the ultra-hard abrasive material is diamond or cBN based.

5. A coated super-hard abrasive according to claim 4, wherein the ultra-hard abrasive material is selected from the group comprising diamond or cBN grit, a PCD substrate, a thermally stable PCD (TSPCD) substrate, a PcBN substrate, a CVD diamond film, and a single crystal diamond substrate.

6. A coated super-hard abrasive according to any one of the preceding claims, wherein the inner layer is formed from an element capable of forming (singly or in combination) carbides, nitrides or borides to the surface(s) of the abrasive material using a hot coating process.

7. A coated super-hard abrasive according to claim 6, wherein the element is selected from the group comprising groups IVa, Va, VIa, IIIb and IVb of the periodic table.

8. A coated super-hard abrasive according to any one of the preceding claims, wherein the inner layer is a titanium or chromium carbide coating in the case of a diamond based core, or a titanium or chromium nitride, boride or boronitride coating in the case of a cBN based core.

## Patentansprüche

1. Beschichtetes superhartes Schleifmittel, das Folgendes umfasst: einen Kern aus superhartem Schleifmaterial, eine innere Schicht aus einem Metallcarbid, -nitrid, -borid oder -carbonitrid, das chemisch an die Außenseite des superharten Schleifmaterials gebondet ist, und eine äußere Schicht aus einem Metallcarbonitrid, das auf der inneren Schicht abgeschieden ist.

2. Beschichtetes superhartes Schleifmittel nach Anspruch 1, wobei die äußere Schicht aus Titancarbonitrid gebildet ist.

3. Beschichtetes superhartes Schleifmittel nach Anspruch 1 oder Anspruch 2, wobei die äußere Schicht durch physikalische Dampfabscheidung abgeschieden ist.

4. Beschichtetes superhartes Schleifmittel nach einem der vorangehenden Ansprüche, wobei das ultraharte Schleifmaterial auf Diamant oder cBN basiert.

5. Beschichtetes superhartes Schleifmittel nach Anspruch 4, wobei das ultraharte Schleifmaterial ausgewählt ist aus der Gruppe bestehend aus Diamant- oder cBN-Körnern, einem PCD-Substrat, einem thermisch stabilen PCD (TSPCD)-Substrat, einem PcBN-Substrat, einem CVD-Diamantfilm und einem Einkristalldiamantsubstrat.

6. Beschichtetes superhartes Schleifmittel nach einem der vorangehenden Ansprüche, wobei die innere Schicht unter Verwendung eines Heißbeschichtungsprozesses aus einem Element gebildet ist, das in der Lage ist, (einzeln oder in Kombination) Carbide, Nitride oder Boride auf der Oberfläche bzw. auf den Oberflächen des Schleifmaterials zu bilden.

7. Beschichtetes superhartes Schleifmittel nach Anspruch 6, wobei das Element aus der Gruppe ausgewählt ist, welche die Gruppen IVa, Va, VIa, IIIb und IVb des Periodensystems der Elemente umfasst.

8. Beschichtetes superhartes Schleifmittel nach einem der vorangehenden Ansprüche, wobei die innere Schicht im Fall eines Kerns auf Diamantbasis eine Titan- oder Chromcarbidbeschichtung ist oder im Fall eines Kerns auf cBN-Basis eine Titan- oder Chromnitrid-, - borid- oder-bomitridbeschichtung ist.

## Revendications

1. Produit abrasif revêtu super-dur comprenant un noyau de matériau abrasif super-dur, une couche interne d'un carbure métallique, nitrure, borure ou carbonitrure chimiquement liée à une surface extérieure du matériau abrasif super-dur et une couche extérieure d'un carbonitrure métallique déposée sur la couche intérieure.

2. Produit abrasif revêtu super-dur selon la revendication 1, dans lequel la couche extérieure est constituée de carbonitrure de titane.

3. Produit abrasif revêtu super-dur selon la revendication 1 ou la revendication 2, dans lequel la couche externe est déposée par dépôt de vapeur physique.

4. Produit abrasif revêtu super-dur selon l'une quelconque des revendications précédentes, dans lequel le matériau abrasif super-dur est à base de diamant ou de cBN.

5. Produit abrasif revêtu super-dur selon la revendication 4, dans lequel le matériau abrasif ultra-dur est choisi dans le groupe comprenant des particules de diamant ou de cBN, un substrat PCD, un substrat PCD thermiquement stable (TSPCD), un substrat PcBN, un film de diamant CVD et un substrat de diamant monocristallin.

6. Produit abrasif revêtu super-dur selon l'une quelconque des revendications précédentes, dans lequel la couche intérieure est constituée d'un élément capable de former (seul ou en combinaison) des carbures, nitrures ou borures sur la ou les surfaces du matériau abrasif en utilisant un procédé de revêtement à chaud.

7. Produit abrasif revêtu super-dur selon la revendication 6, dans lequel l'élément est choisi dans le groupe comprenant les groupes IVa, Va, VIa, IIIb et IVb de la classification périodique des éléments.

8. Produit abrasif revêtu super-dur selon l'une quelconque des revendication précédentes, dans lequel la couche intérieure est un revêtement au carbure de titane ou de chrome dans le cas d'un noyau à base de diamant, ou un nitrure de chrome ou de titane, un revêtement de borure ou de nitrure de bore dans le cas d'un noyau à base de cBN.
